# EUROPEAN PATENT APPLICATION

(11) **EP 4 748 466 A1**
(43) Date of publication of application: **27.05.2026**
(21) Application number: 25217835.5
(22) Date of filing: 21.11.2025
(51) Int. Cl.: B01D 29/11, B01D 35/06, B01D 35/16, B01D 36/00

(54) **FILTRATION APPARATUS COMPRISING A MAGNETIC SLUDGE SEPARATOR FOR HEATING HYDRAULIC SYSTEMS AND THE LIKE**

(30) Priority: 25.11.2024 IT 202400026493
(71) Applicant: Carlo Poletti S.r.l., 28024 Gozzano (NO) (IT)
(72) Inventor: POLETTI, Stefano, 28024 Gozzano (NO) (IT)
(74) Representative: Buzzi, Notaro & Antonielli d'Oulx S.p.A.

(57) **Abstract**

Filtration apparatus comprising a magnetic sludge separator for heating hydraulic systems and the like, comprising a hollow body (1) having a first fitting (5) and a second fitting (6) respectively for the inlet and outlet of a thermal fluid, a filtering element (16) interposed between the first and second fitting (5, 6), an elongated magnetic element (10) extending axially along the body (1), a drain valve (7) disposed at the base of the body (1) and an air vent valve (6) situated at the top of the body (1). The body (1) is formed by three distinct axial sections, respectively upper, central and lower (2, 3, 4), connected together in a sealed manner so as to be rotatable about a common axis (A) and of which the upper section (2) carries the first fitting (5) and the air vent valve (6), the central section (3) carries the second fitting (6), and the lower section carries the drain valve (7) and supports the magnetic element (10).

## Description

### Field of the invention

The present invention relates to filtration apparatuses comprising a magnetic sludge separator ("sludge separator") for heating hydraulic systems and the like, in particular for heat pumps.

### Prior art

Such filtration apparatuses typically comprise a hollow body having a first fitting and a second fitting for the inlet and outlet of a thermal fluid, a filtering element interposed between the first and second fitting, and an elongated magnetic element extending axially along the body or disposed radially to "embrace" the body itself. A drain valve disposed at the lower end of the body and an air vent valve are also normally provided.

A filtration apparatus of this type is described and illustrated, for example, in Italian patent n. 102017000050230.

Document US 2024/293827A1 describes an apparatus according to the preamble of claim 1, wherein the three elements of the apparatus body, once assembled together, remain fixed, and a fourth element carrying the inlet fitting is provided superiorly.

### Summary of the invention

The object of the present invention is to produce a filtration apparatus of the type defined above having a configuration such that it can be easily installed even in confined spaces and in a flexible manner, thus allowing possible installations that current filtration apparatuses on the market do not permit, and furthermore such as to facilitate its maintenance.

A further object of the invention is to produce a filtration apparatus of the type indicated above that is particularly robust and resistant and formed by a reduced number of components.

In view of achieving these and other objects, the invention has for its subject a filtration apparatus as defined in the preamble of claim 1, whose peculiar characteristic lies in the fact that the body is formed by three distinct axial sections, respectively upper, central and lower, connected together in a sealed manner so as to be freely rotatable about a common axis and of which the upper section is formed at its top with the first fitting and carries the air vent valve, the central section carries the second fitting, and the lower section carries the drain valve and supports said magnetic element.

According to another characteristic of the invention the central section is connected on one side to the upper section and on the other side to the lower section in a rapidly dismountable manner via respective disengageable elastic clips.

According to a further advantageous characteristic of the invention the filtering element is carried by the lower section and is situated inside the upper section of the body: more particularly, the filtering element has the shape of an inverted truncated conical cup whose base is connected to the top of the magnetic element within the upper section of the body and whose edge is engaged with an internal annular flange of the central section.

The magnetic element is conveniently inserted in an extractable manner into a tubular appendage axially protruding from the lower section and extending through the central section and into the upper section.

### Brief description of the drawings

The invention will now be described in detail with reference to the accompanying drawings, provided by way of non-limiting example only, in which:

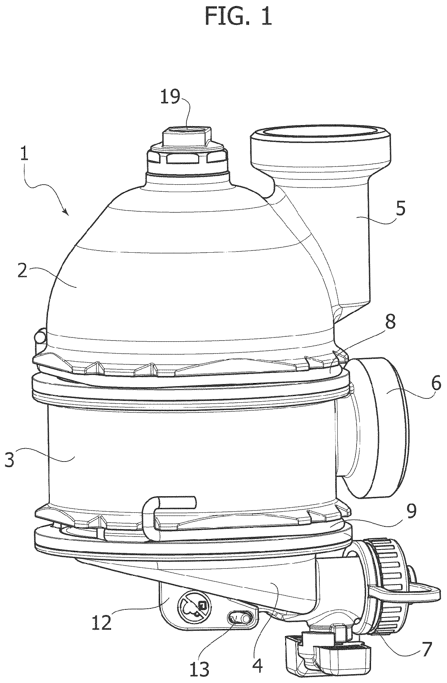

figure 1 is a schematic perspective view of a filtration apparatus with magnetic separator according to the invention,
figure 2 is a side elevational view of figure 1,
figure 3 is a vertical sectional view along line III-III of figure 2, and

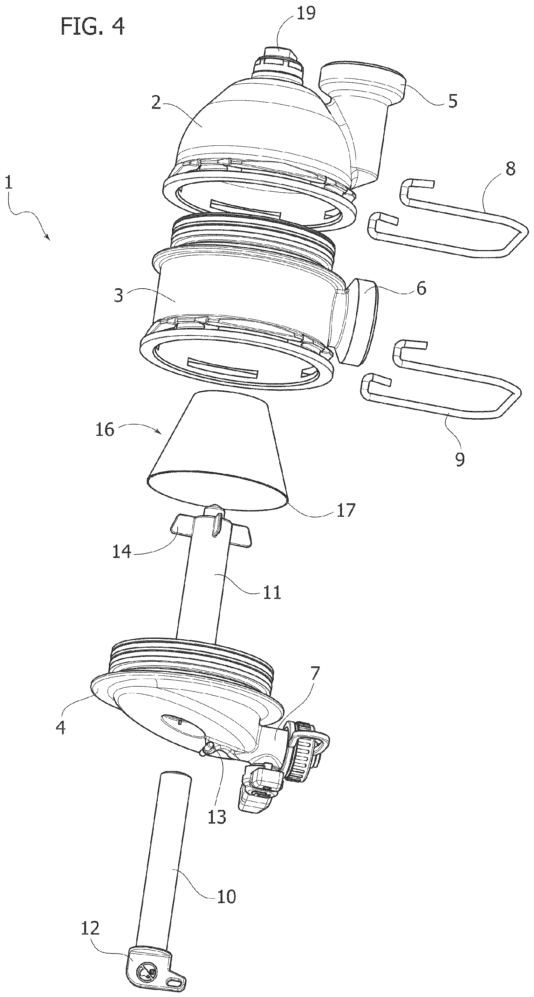

figure 4 is an exploded perspective view of the filtration apparatus.

### Detailed description of the invention

Referring to the drawings, a filtration apparatus with magnetic sludge separator for heating hydraulic systems, for example heat pumps, comprises a hollow body, indicated in its entirety by 1, formed according to the invention by three distinct axial sections: an upper section 2, a central or intermediate section 3, and a lower section 4.

The upper section 2 has a generally dome-like shape and is provided on one side with a fitting 5, which can be, as desired, an inlet or an outlet for a thermal fluid, and on its top with an air vent valve 19.

The central section 3 has a generally cylindrical shape and is provided on one side with a fitting 6 which can be selectively an outlet or an inlet for the thermal fluid.

The lower section 4 has a bottom inclined towards a drain tap 7.

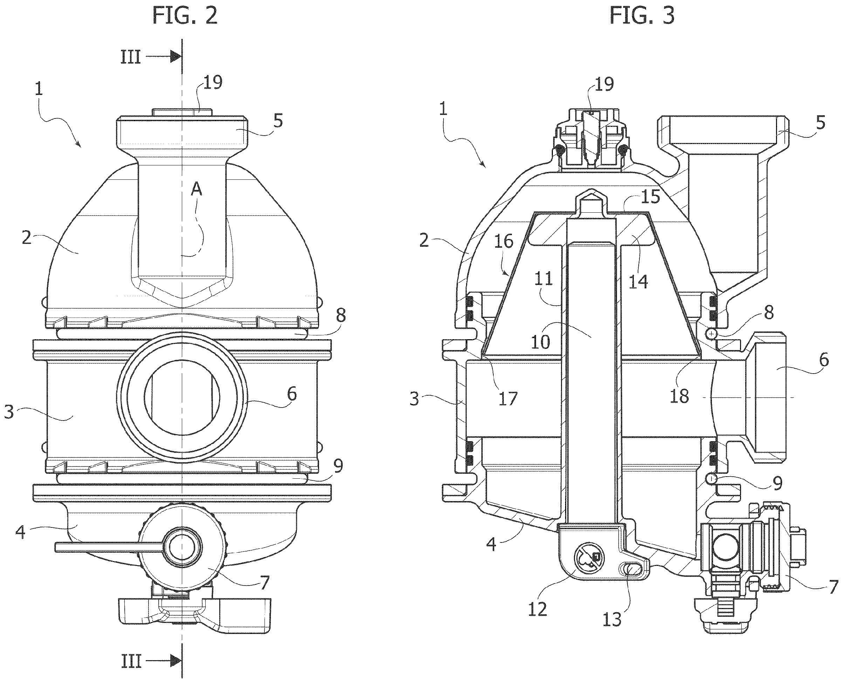

In accordance with the peculiar characteristic of the invention the three sections 2, 3 and 4 are connected together in a sealed manner so as to be rotatable about the axis of the body 1, indicated by A in figure 2. The rotatable coupling is achieved via a pair of elastic clips 8, 9 which join the central section 3 respectively with the upper section 2 and with the lower section 4. The clips 8 and 9 are easily disengaged radially so as to allow rapid assembly and equally rapid disassembly of the three sections of the body 1.

Inside the cavity defined by the body 1 is disposed an elongated cylindrical magnetic element 10, which extends along the axis A inside a tubular appendage 11 formed integrally with the lower section 4 and extending through the central section 3 into the upper section 2. The magnetic element 10 is easily extractable from the tubular appendage 11 by acting on an end handle 12 accessible below the body 1 and lockable relative to the bottom of the lower section 4 via a radial pin 13.

The top of the tubular appendage 11 is formed with an integral spider 14 on which is disposed the bottom wall 15 of a filtering element 16 shaped like an inverted truncated conical cup, whose lower edge 17 is engaged with an internal annular flange 18 of the central section 3 of the body 1.

In operation the incoming thermal fluid, for example from fitting 6 (or from fitting 5) penetrates inside the body 1 and exits from fitting 5 (or from fitting 6) after being filtered through the filtering element 16 and after the magnetic separation of the ferromagnetic particles, carried by the fluid, by the magnetic element 10.

When the liquid enters the device it finds a significant increase in the flow section which causes a decrease in velocity, thus creating a "calm zone" such as to favor both the deposition of dirt particles and the separation of air present in the liquid. The air collects in the upper part of the upper section 2 and can therefore be evacuated through the air vent valve 19.

The magnetic element 10 can be periodically slid out of the tubular appendage 11 to the outside of the body 1 in such a way that the ferromagnetic particles can collect by gravity at the bottom of the lower section 4 to be removed from the body 1 through the drain tap 7.

It should be noted that the lower section 4 will normally be made of plastic material, while the upper section 2 and the intermediate section 3 can be either plastic or metallic, for example brass.

It will be apparent from the foregoing description that the filtration apparatus according to the invention has a particularly compact configuration and such as to allow its installation in an extremely flexible manner, with reduced dimensions, as well as easy maintenance.

Naturally, the construction details and the embodiments can be widely varied with respect to what has been described and illustrated, without thereby departing from the scope of the present invention as defined in the claims that follow.

## Claims

1. Filtration apparatus comprising a magnetic sludge separator for heating hydraulic systems and the like, comprising a hollow body (1) having a first fitting (5) and a second fitting (6) for the inlet and outlet of a thermal fluid, a filtering element (16) interposed between the first and second fitting (5, 6), an elongated magnetic element (10) extending axially along the body (1), a drain valve (7) disposed at the base of the body (1) and an air vent valve (19), **characterized in that** the body (1) is formed by three distinct axial sections, respectively upper, central and lower sections (2, 3, 4) connected together in a sealed manner so as to be freely rotatable about a common axis (A) and of which the upper section (2) is formed at its top with the first fitting (5) and carries the air vent valve (19), the central section (3) carries the second fitting (6), and the lower section carries the drain valve (7) and supports said magnetic element (10).

2. Filtration apparatus according to claim 1, **characterized in that** the central section (3) is connected on one side to the upper section (2) and on the other side to the lower section (4) in a rapidly dismountable manner via respective disengageable elastic clips (8, 9).

3. Filtration apparatus according to claim 1 or 2, **characterized in that** the filtering element (16) has the shape of an inverted truncated conical cup whose base (15) is connected to the top of the magnetic element (10) within the upper section (2) of the body (1) and whose edge (17) is engaged with an internal annular flange (18) of the central section (3).

4. Filtration apparatus according to one or more of the preceding claims, **characterized in that** the magnetic element (10) is inserted in an extractable manner into a tubular appendage (11) axially protruding from the lower section (4) and extending through the central section (3) and into the upper section (2) of the body (1).
